# EUROPEAN PATENT APPLICATION

(11) **EP 4 811 851 A1**
(43) Date of publication of application: **23.09.2026**
(21) Application number: 23958559.9
(22) Date of filing: 15.11.2023
(51) Int. Cl.: H04W 24/04

(54) **WIRELESS COMMUNICATION METHOD FOR SENSING MEASUREMENT, AND WIRELESS COMMUNICATION DEVICE**

(71) Applicant: Shenzhen TCL New Technology Co., Ltd., Shenzhen, Guangdong 518052 (CN)
(72) Inventor: BAO, Zhanjing, Shenzhen, Guangdong 518052 (CN)
(74) Representative: Murgitroyd & Company
(86) International application number: PCT/CN2023/131886
(87) International publication number: WO 2025/102278

(57) **Abstract**

Embodiments of the present application provide a wireless communication method for sensing measurement, and a wireless communication device. The method is executed at a first node and comprises: transmitting a first sensing measurement message to a second node and/or a network element and/or receiving a second sensing measurement message sent by the second node and/or the network element, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing. In this way, a wireless communication network can have the capability and process to perform measurement on the basis of a request of a sensing service.

## Description

### TECHNICAL FIELD

Embodiments of the present application relate to the field of mobile communication technologies, and particularly relate to a wireless communication method for sensing measurement and a wireless communication device.

### BACKGROUND TECHNOLOGY

In the prior art, solutions of wireless network communication technology (Wi-Fi) sensing standards are only applicable to wireless local area network (Wireless Local Area Networks, WLAN) devices, for example, interactions between an access point (Access Point, AP) and a station (Station, STA), and are not applicable to long-distance wireless communication networks, such as multi-level network architectures including a core network and a radio access network (RAN). Therefore, it is necessary to provide a wireless communication method for sensing measurement and a wireless communication device to improve problems in the prior art and other problems.

### SUMMARY OF INVENTION

Embodiments of the present application provide a wireless communication method for sensing measurement and a wireless communication device.

Embodiments of the present application provide a wireless communication method for sensing measurement, performed by a first node, wherein the method comprises:

Transmitting, to a second node and/or a network element, a first sensing measurement message and/or receiving a second sensing measurement message transmitted by the second node and/or the network element, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

Embodiments of the present application provide a wireless communication method for sensing measurement, performed by a network element, wherein the method comprises:

Receiving a first sensing measurement message transmitted by a first node and/or transmitting a second sensing measurement message to the first node, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

Embodiments of the present application provide a wireless communication device, comprising: a processor and a memory, wherein the memory is configured to store a computer program, and the processor is configured to invoke and run the computer program stored in the memory to perform the above wireless communication method for sensing measurement.

Embodiments of the present application provide a user equipment, comprising a processor and a memory. The memory is configured to store a computer program, and the processor is configured to invoke and run the computer program stored in the memory to perform the above wireless communication method for sensing measurement.

Embodiments of the present application provide a base station, comprising a processor and a memory. The memory is configured to store a computer program, and the processor is configured to invoke and run the computer program stored in the memory to perform the above wireless communication method for sensing measurement.

Embodiments of the present application provide a network element, comprising a processor and a memory. The memory is configured to store a computer program, and the processor is configured to invoke and run the computer program stored in the memory to perform the above wireless communication method for sensing measurement.

Embodiments of the present application provide a chip configured to implement the above wireless communication method for sensing measurement.

Specifically, the chip comprises: a processor configured to invoke and run a computer program from a memory, such that a device equipped with the chip performs the above wireless communication method for sensing measurement.

Embodiments of the present application provide a computer-readable storage medium configured to store a computer program, wherein the computer program causes a computer to perform the above wireless communication method for sensing measurement.

Embodiments of the present application provide a computer program product comprising computer program instructions, wherein the computer program instructions cause a computer to perform the above wireless communication method for sensing measurement.

Embodiments of the present application provide a computer program which, when executed on a computer, causes the computer to perform the above wireless communication method for sensing measurement.

By means of the above technical solutions, the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing. In this way, a wireless communication network can have the capability and process to perform measurement based on a request of a sensing service.

### BRIEF DESCRIPTION OF THE DRAWINGS

The accompanying drawings described herein are provided to further understand the present application and constitute a part of the present application. The illustrative embodiments of the present application and the descriptions thereof are used to explain the present application and do not constitute improper limitations to the present application. In the drawings:
FIG. 1 is a schematic diagram of a wireless communication system architecture provided by embodiments of the present application.
FIG. 2 is a schematic block diagram of a wireless communication system architecture provided by embodiments of the present application.
FIG. 3 is a schematic flowchart of a wireless communication method for sensing measurement provided by embodiments of the present application.
FIG. 4 is a schematic flowchart of a wireless communication method for sensing measurement provided by embodiments of the present application.
FIG. 5 is a schematic flowchart of a wireless communication method for sensing measurement provided by embodiments of the present application.
FIG. 6 is a schematic flowchart of a wireless communication method for sensing measurement provided by embodiments of the present application.
FIG. 7 is a schematic flowchart of a wireless communication method for sensing measurement provided by embodiments of the present application.
FIG. 8 is a schematic flowchart of a wireless communication method for sensing measurement provided by embodiments of the present application.
FIG. 9 is a schematic flowchart of a wireless communication method for sensing measurement provided by embodiments of the present application.
FIG. 10 is a schematic flowchart of a wireless communication method for sensing measurement provided by embodiments of the present application.
FIG. 11 is a schematic flowchart of a wireless communication method for sensing measurement provided by embodiments of the present application.
FIG. 12 is a schematic structural diagram of a wireless communication device provided by embodiments of the present application.
FIG. 13 is a schematic structural diagram of a chip according to embodiments of the present application.
FIG. 14 is a schematic block diagram of a wireless communication system provided by embodiments of the present application.

### DETAILED DESCRIPTION OF THE PREFERRED EMBODIMENTS

The technical solutions in the embodiments of the present application will be described below with reference to the accompanying drawings in the embodiments of the present application. Obviously, the described embodiments are only a part of the embodiments of the present application, rather than all of the embodiments. Based on the embodiments of the present application, all other embodiments obtained by a person of ordinary skill in the art without creative efforts shall fall within the protection scope of the present application.

The technical solutions of the embodiments of the present application may be applied to various wireless communication systems, such as a Long Term Evolution (LTE) system, an LTE Frequency Division Duplex (FDD) system, an LTE Time Division Duplex (TDD) system, a 5G communication system, or a future wireless communication system.

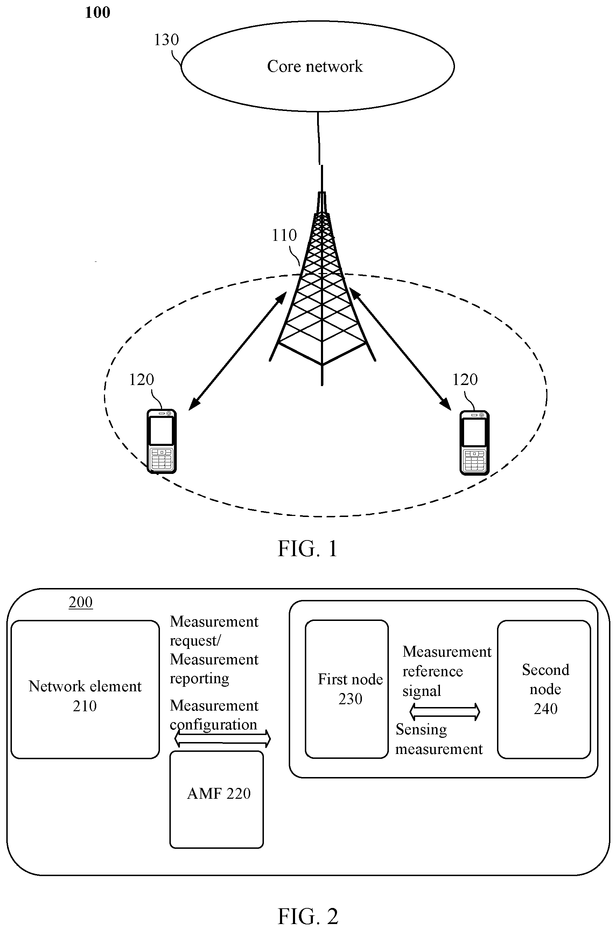

Exemplarily, a wireless communication system 100 to which the embodiments of the present application are applied is as shown in FIG. 1. The wireless communication system 100 may include a base station 110, and the base station 110 may be a device that communicates with user equipment 120 (User Equipment, UE). The base station 110 may provide communication coverage for a specific geographic area and may communicate with user equipment located within the coverage area. Optionally, the base station 110 may be an Evolutional Node B (eNB or eNodeB) in an LTE system, or the base station may be a mobile switching center, a relay station, an access point, an in-vehicle device, a wearable device, a hub, a switch, a bridge, a router, a network-side device in a 5G network, or a base station in a future communication system.

The wireless communication system 100 further includes at least one user equipment 120 located within the coverage area of the base station 110. As used herein, "user equipment" includes, but is not limited to, devices connected via wired lines, such as via a Public Switched Telephone Network (PSTN), a Digital Subscriber Line (DSL), a digital cable, a direct cable connection; and/or another data connection/network; and/or devices configured to receive/transmit communication signals via a wireless interface, such as for a cellular network, a Wireless Local Area Network (WLAN), a digital television network such as a DVB-H network, a satellite network, an AM-FM broadcast transmitter; and/or another user equipment; and/or an Internet of Things (IoT) device. A user equipment configured to communicate via a wireless interface may be referred to as a "wireless communication terminal," a "wireless terminal," or a "mobile terminal." Examples of mobile terminals include, but are not limited to, satellite or cellular telephones; personal communication system (PCS) terminals that may combine cellular radiotelephones with data processing, facsimile, and data communication capabilities; personal digital assistants (PDAs) that may include radiotelephones, pagers, Internet/Intranet access, Web browsers, notepads, calendars, and/or Global Positioning System (GPS) receivers; and conventional laptop and/or handheld receivers or other electronic devices including radiotelephone transceivers. The user equipment may refer to an access terminal, a user unit, a user station, a mobile station, a mobile device, a remote station, a remote user equipment, a wireless communication device, or a user agent. The access terminal may be a cellular telephone, a cordless telephone, a Session Initiation Protocol (SIP) telephone, a Wireless Local Loop (WLL) station, a personal digital assistant (PDA), a handheld device with wireless communication capability, a computing device, or other processing devices connected to a wireless modem, an in-vehicle device, a wearable device, user equipment in a 5G network, or user equipment in a future evolved Public Land Mobile Network (PLMN).

Optionally, device-to-device (D2D) communication may be performed between user equipments 120.

Optionally, the 5G communication system or 5G network may also be referred to as a New Radio (NR) system or an NR network.

The wireless communication system 100 further includes a core network 130. The core network 130 may be an IP mobile communication network operated by a mobile communication operator. For example, the core network 130 may be a core network used by a mobile communication operator to operate and manage the wireless communication system 100, or may also be a core network used by a virtual mobile communication operator such as a Mobile Virtual Network Operator (MVNO).

The core network 130 may be connected to the base station 110 and serve as a relay device for transmitting user data. The user equipment 120 transmits and receives user data via the core network 130. It should be noted that the communication of user data is not limited to IP communication, and may also be non-IP communication.

FIG. 1 exemplarily shows one base station 110, two user equipments 120, and the core network 130. Optionally, the wireless communication system 100 may include multiple base stations, and each base station may cover other numbers of user equipments, which is not limited in the embodiments of the present application.

Optionally, the wireless communication system 100 may further include other network entities such as a network controller, a mobility management entity, and a network element, which are not limited in the embodiments of the present application. For example, the core network 130 may include other network entities such as a network controller and a mobility management entity, which are not limited in the embodiments of the present application.

It should be understood that, in the embodiments of the present application, devices in the network/system having wireless communication functions may be referred to as wireless communication devices. Taking the wireless communication system 100 shown in FIG. 1 as an example, the wireless communication devices may include the base station 110, the user equipment 120, and the core network 130, each having communication functions. The base station 110 and the user equipment 120 may be the specific devices described above and are not repeated herein. The wireless communication devices may further include other devices in the wireless communication system 100 (e.g., the core network 130), for example, the core network 130 may include other network entities such as a network controller and a mobility management entity, which are not limited in the embodiments of the present application.

Exemplarily, a wireless communication system 200 to which the embodiments of the present application are applied is shown in FIG. 2. The wireless communication system 200 may include a network element 210, an Access and Mobility Management Function (AMF) 220, a first node 230, a second node 240, and/or a sensing reference node. At least two of the network element 210 (also referred to as a Perception Management Function (PMF)), the AMF 220, the first node 230, the second node 240, and the sensing reference node may communicate with each other. Optionally, the wireless communication system 200 may further include other network entities such as a network controller and a mobility management entity, which are not limited in the embodiments of the present application.

The network element 210 may be, for example, a perception management function network element and/or a sensing server. The network element 210 transmits a second sensing measurement message to the first node 230 and/or the second node 240, or receives a first sensing measurement message transmitted by the first node 230 and/or the second node 240, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing. For example, the first sensing measurement message may include a sensing service request message. The network element 210 may receive the sensing service request message, and, based on the configuration of the sensing service request message and the sensing measurement capability of the first node 230 and/or the second node 240, complete decision-making, configuration, scheduling, management, and computation of sensing measurement.

The AMF 220 may be responsible for initiating or receiving the sensing service request message, and forwarding the sensing service request message to the network element 210. The AMF 220 may report sensing results calculated by the network element 210 to a sensing service requester. The AMF 220 may transmit messages of the first node 230 and/or the second node 240 to the network element 210.

The first node 230 transmits a first sensing measurement message to the second node 240 and/or the network element 210, and/or receives a second sensing measurement message transmitted by the second node 240 and/or the network element 210, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing. Exemplarily, the first node 230 may be a RAN, a base station, or a UE. When the first node 230 is a RAN or a base station, the first node 230 may perform uplink detection based on reference signals transmitted by the second node 240, and/or configure uplink resources for the second node 240, and/or transmit downlink detection reference signals to the second node 240, and/or relay messages between the network element 210 and the second node 240, and/or provide its sensing measurement capability to the network element.

The second node 240 transmits a second sensing measurement message to the first node 230 and/or the network element 210, and/or receives a first sensing measurement message transmitted by the first node 230 and/or the network element 210, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing. Exemplarily, the second node 240 may be a RAN, a base station, or a UE. When the second node 240 is a UE, the second node 240 may perform downlink detection based on reference signals transmitted by the first node 230, and/or perform uplink transmission based on resource configuration information from the first node 230, and/or assist sensing measurement based on auxiliary information transmitted by the network element 210, and/or locally compute measurement results, and/or provide its sensing measurement capability to the network element 210.

The sensing reference node may be a UE in the communication system, or may be a dedicated sensing reference node in the network. The sensing reference node may perform uplink transmission based on resource configuration information from the first node 230, and/or provide sensing reference information to assist sensing measurement configuration or sensing result computation.

It can be understood that, according to the above, the first node 230 and/or the second node 240 in the embodiments of the present application may be a RAN, a base station, or a UE. The network element 210 and the first node 230 and/or the second node 240 may communicate via an IP layer connection, and the first node 230 and/or the second node 240 may communicate via time, frequency, and spatial channel resources therebetween. The first node 230 and/or the second node 240 and the network element 210 may exchange sensing capabilities. The present application does not limit data transmission links between the first node 230 and/or the second node 240 and the network element 210, nor between the first node 230 and the second node 240.

It should be understood that the terms "system" and "network" are often used interchangeably herein. The term "and/or" herein is only used to describe an association relationship between associated objects, indicating that three relationships may exist. For example, A and/or B may indicate: A alone, both A and B, or B alone. In addition, the character "/" herein generally indicates that the associated objects before and after it are in an "or" relationship.

To facilitate understanding of the technical solutions of the embodiments of the present application, the related technical solutions are described below.

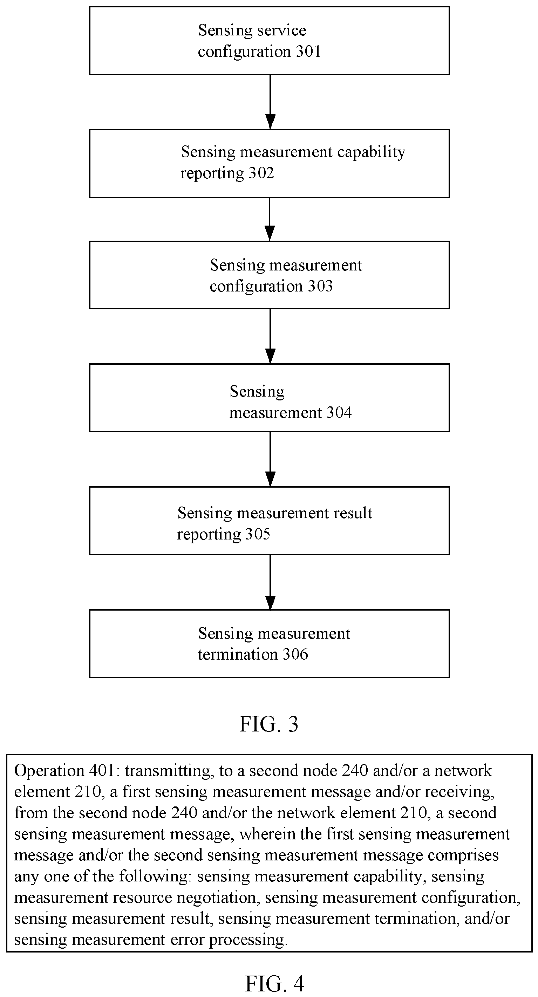

FIG. 3 is a schematic flowchart of a wireless communication method for sensing measurement provided by embodiments of the present application. As shown in FIG. 3, the wireless communication method for sensing measurement comprises at least one of the following operations: operation 301: sensing service configuration; operation 302: sensing measurement capability reporting; operation 303: sensing measurement configuration; operation 304: sensing measurement; operation 305: sensing measurement result reporting; and/or operation 306: sensing measurement termination. These operations may be performed in parallel, may have a sequential relationship, or may have no sequential relationship.

Exemplarily, in some embodiments of the present application, the first node 230 transmits a first sensing measurement message to the second node 240 and/or the network element 210, and/or receives a second sensing measurement message transmitted by the second node 240 and/or the network element 210, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

Exemplarily, in some embodiments of the present application, the first sensing measurement message comprises a sensing capability reporting message, and/or the second sensing measurement message comprises a sensing capability request message, and/or the second sensing measurement message comprises a sensing measurement request message, and/or the first sensing measurement message comprises a sensing measurement result reporting message, and/or the second sensing measurement message comprises a sensing measurement reporting request message, and/or the first sensing measurement message comprises sensing measurement configuration information based on channel state information (CSI), and/or the first sensing measurement message comprises a sensing CSI measurement report.

Operation 301: Sensing service configuration.

Exemplarily, in some embodiments of the present application, a UE, a sensing service client, an AF (Application Function), or a core network may initiate a sensing service request. When the AMF 220 receives the sensing service request, it performs sensing service configuration according to QoS information, a sensing type, a sensing reporting time, a perception management function identifier (PMF ID), and other information indicated in the sensing service request, and transmits sensing service configuration information to the network element.

The network element 210, as a sensing server, after receiving the sensing service request transmitted by the AMF 220, establishes a sensing session with a target device node indicated in the request according to the sensing service request. Based on different sensing service requests, multiple sensing sessions may exist simultaneously, and are distinguished by sensing session identifiers.

Operation 302: Sensing measurement capability reporting.

Exemplarily, in some embodiments of the present application, after establishing a sensing session according to the sensing service request, the network element 210 needs to collect sensing measurement capabilities of the first node 230 and/or the second node 240 for sensing measurement configuration. The sensing measurement capability reporting may be initiated by the network element 210 transmitting a sensing capability request message, or may be autonomously reported by the first node 230 and/or the second node 240. Exemplarily, in some embodiments, if the AMF 220 stores sensing measurement capabilities of a target device, the AMF 220 may directly report the sensing measurement capabilities of the target device to the network element 210 after performing a local query.

During this process, if the network element 210 detects that a sensing reference node exists in a target sensing area, it may further determine whether to collect sensing reference information of the sensing reference node. The sensing reference node may provide sensing reference information based on a sensing reference information request message from the network element 210 or autonomously, to assist the network element 210 in completing decision-making, configuration, and other processes of sensing measurement.

When the first node 230 and/or the second node 240 exchange sensing measurement capabilities, sensing measurement resource negotiation is also performed. The sensing measurement resource negotiation may include resource information required by the local node (e.g., the first node 230) for sensing measurement and resource configuration information required by another node (e.g., the second node 240) for sensing measurement. The resource configuration information includes design information of reference signals, time-domain, frequency-domain, and spatial resource information for sensing measurement, and function information related to sensing measurement. These information may be negotiated between the first node 230 and the second node 240 by means of pre-configuration or direct feedback. Similar to capability reporting between the first node 230 and/or the second node 240 and the network element 210, the sensing measurement resource negotiation between the first node 230 and the second node 240 may also be initiated by a request message or may be autonomously performed by the first node 230 and/or the second node 240.

Exemplarily, in some embodiments of the present application, the sensing measurement resource negotiation information comprised in the first sensing measurement message comprises first reference signal resource information, and the first reference signal resource information is used to indicate sensing measurement resource information requested by the first node 230.

Exemplarily, in some embodiments of the present application, the sensing measurement resource negotiation information comprised in the second sensing measurement message comprises second reference signal resource information, and the second reference signal resource information is used to indicate sensing measurement resource information supported by the second node 240.

Operation 303: Sensing measurement configuration.

Exemplarily, in some embodiments of the present application, sensing measurement may be sensing measurement performed based on the network element 210, or sensing measurement performed based on a RAN side between the first node 230 and the second node 240.

Exemplarily, in some embodiments of the present application, for sensing measurement based on the network element 210: the network element 210 determines sensing measurement configuration information such as a sensing measurement method, a sensing measurement execution node, and a sensing measurement reporting type based on information indicated by a sensing service request, sensing measurement capabilities of the first node 230 and/or the second node 240, and possibly collected sensing reference information of a sensing reference node. A sensing measurement request message carrying the sensing measurement configuration information is transmitted by the network element 210 to the first node 230 and/or the second node 240 to complete sensing measurement configuration. Thereafter, between the first node 230 and the second node 240, based on a sensing measurement resource negotiation result obtained during the sensing measurement capability reporting process, sensing measurement resource configuration is completed between the first node 230 and the second node 240. That is, on the RAN side between the first node 230 and the second node 240, channel resources required for sensing measurement, reference signals used for measurement, and the like are configured for a node to perform measurement. Multiple sensing measurement processes may exist simultaneously and are distinguished by sensing measurement identifiers.

For sensing measurement based on the RAN side between the first node 230 and the second node 240: different from the above, sensing measurement based on the RAN side is not uniformly configured by the network element 210, and mainly performs sensing measurement tasks based on CSI measurement. Sensing measurement configuration based on the RAN side between the first node 230 and the second node 240 configures measurement resources according to sensing measurement configuration requirements of the first node 230 and/or the second node 240. Configuration of measurement reporting content and manner may refer to some embodiments of the present application.

Operation 304: Sensing measurement.

Exemplarily, in some embodiments of the present application, according to sensing configuration information carried in a sensing measurement request message, the first node 230 and/or the second node 240 transmits sensing reference signals on specified time-domain, frequency-domain, and spatial resources based on requirements indicated by the sensing measurement configuration, and performs measurement based on the sensing reference signals.

Operation 305: Sensing measurement result reporting.

Exemplarily, in some embodiments of the present application, for sensing measurement based on the network element 210: sensing measurement results include CSI information, Doppler measurement results, sensing target information (e.g., velocity and position), and the like, and reporting of designated results is performed based on a reporting type indicated by the sensing measurement configuration. Sensing measurement result reporting may be triggered by the network element 210 transmitting reporting request information, or may be autonomously reported by the first node 230 and/or the second node 240 based on instructions of the sensing measurement request.

For sensing measurement based on the RAN side between the first node 230 and the second node 240: according to an indication of sensing CSI measurement resource configuration in the previous operation, a node performing measurement reports CSI measurement results. The reporting process is a two-stage reporting process, and measurement result reporting is strictly performed on reserved time-frequency resources according to a first delay and a second delay of sensing reporting.

For the above two sensing measurements, calculation of sensing measurement results may be performed at the first node 230 and/or the second node 240, and after calculation is completed, sensing results are reported to the network element 210. Alternatively, sensing measurement results may be uniformly reported and aggregated at the network element 210 by the first node 230 and/or the second node 240, and the network element 210 performs calculation from sensing measurement results to sensing results.

Operation 306: Sensing measurement termination.

Exemplarily, in some embodiments of the present application, sensing measurement termination includes explicit termination and implicit termination. For example, explicit termination: in the above process of embodiments of the present application, the first node 230 and/or the second node 240, and/or the network element 210 may transmit a sensing measurement termination message at any time to terminate an ongoing sensing measurement. For example, implicit termination: during the sensing measurement configuration phase, the first node 230 and the second node 240, or the first node 230 and/or the second node 240 and the network element 210 may agree on conditions for sensing termination. That is, without transmitting a termination message by the first node 230 and/or the second node 240 or the network element 210, sensing measurement is automatically terminated based on occurrence of conditions such as a certain time, a certain number of measurements, or a certain detection result.

In the above process, if an error occurs at the first node 230 and/or the second node 240, an error report message is sent to the network element 210 at the first time. The network element 210 determines how to process the error based on the received error report message, and transmits an error handling message carrying a processing manner of the error to a corresponding network element. After receiving the message, the corresponding network element performs error processing according to an indication of the message. According to different reported error contents, error processing manners include, but are not limited to, terminating a sensing measurement process, retransmitting a message, re-performing sensing measurement, discarding a message, and the like.

Exemplarily, in some embodiments of the present application, the sensing measurement capability information comprised in the first sensing measurement message comprises at least one of the following information: a sensing capability indication information, sensing measurement accuracy information, sensing measurement behavior information, a sensing device indication information, and/or a device list information for a service.

Exemplarily, in some embodiments of the present application, the sensing measurement capability information comprised in the second sensing measurement message comprises at least one of the following information: a sensing capability request information, a sensing capability request target information, and/or a sensing capability request content information.

Exemplarily, in some embodiments of the present application, a reporting manner of the sensing measurement capability information comprises at least one of the following: the first node 230 transmits the first sensing measurement message to the second node 240 and/or the network element 210, and/or, prior to transmitting the first sensing measurement message to the second node 240 and/or the network element 210, the first node 230 receives the second sensing measurement message from the second node 240 and/or the network element 210. The sensing measurement capability information is sensing measurement capability information comprised in the first sensing measurement message and/or sensing measurement capability information comprised in the second sensing measurement message.

Exemplarily, in some embodiments of the present application, the first sensing measurement message and/or the second sensing measurement message comprises sensing session identification information, sensing measurement identification information, ACK indication information, sensing measurement message type information, segmented message indication information, and/or segmentation information.

Specifically, in some embodiments of the present application, the first sensing measurement message and/or the second sensing measurement message comprises a first information element and a second information element, wherein the first information element belongs to a common part message among all messages comprised in the first sensing measurement message and/or the second sensing measurement message, the second information element belongs to a non-common part message in the first sensing measurement message and/or the second sensing measurement message, and any two of the second information elements are different from each other.

In some examples, the first information element comprises sensing session identification information, sensing measurement identification information, ACK indication information, sensing measurement message type information, segmented message indication information, and/or segmentation information.

Exemplarily, in some embodiments of the present application, the second information element of the sensing capability reporting message comprises sensing measurement capability information, sensing measurement accuracy information, sensing measurement behavior information, sensing device indication information, and/or device list information for a service.

Exemplarily, in some embodiments of the present application, the second information element of the sensing capability request message comprises sensing capability request information, sensing capability request target information, and/or sensing capability request content information.

Exemplarily, in some embodiments of the present application, the second information element of the sensing measurement request message comprises sensing measurement behavior information, sensing measurement device information, segmented reporting information, sensing measurement reporting manner information, sensing measurement periodicity information, and/or sensing measurement termination manner information.

Exemplarily, in some embodiments of the present application, the first information element is a common information element (common IE) carried by all messages. The second information element is a message body information element (message body IE) carried by different messages. The following table defines that the common IE of the sensing measurement message includes, but is not limited to:

**Table 1: Common IE of sensing measurement messages.**

| Message | IE (information element) description |
|---|---|
| Common IE | - Sensing session identifier: indicates that a current message belongs to a sensing session. |
| | - Sensing measurement identifier: indicates that a current message belongs to a sensing measurement. |
| | - Whether the message requires ACK: indicates whether a receiver of the message needs to feed back an ACK. When the IE is true, it indicates that the current message requires the receiver to feed back an ACK, and a sender starts a timeout timer. If the ACK from the receiver is not received within a timeout, the sender retransmits the message; when the IE is false, the sender does not start the timeout timer after transmitting the message. |
| | - Sensing measurement message type: indicates a type of the current message, including but not limited to various sensing measurement message types described above. |
| | - Segmentation message indication: indicates whether the current message is a segmented transmission message. When the IE is true, it indicates that the message is a segmented transmission message, and whether there is a segment to be transmitted is indicated by segmentation information; when the IE is false, it indicates that the message is not a segmented transmission message. |
| | - Segmentation information (optional): this IE exists only when the segmentation message indication IE is true. When the segmentation information is true, it indicates that there is still a segment to be transmitted and the current transmission is not completed; when the segmentation information is false, it indicates that the message is a last segment of segmented transmission, and after receiving the message, the segmented transmission is completed. |

In some examples, Table 1 describes that the common IE of the sensing measurement message comprises sensing session identification, sensing measurement identification, whether the message requires ACK, sensing measurement message type, segmentation message indication, and/or segmentation information.

In some embodiments of the present application, among all information elements (IEs) comprised in the sensing measurement message (common IE and message body IE), a method for carrying information may be explicit or implicit. For example, explicitly, all information content to be carried is directly and completely transmitted to a receiver by a message, or is transmitted to the receiver through indexing, numbering, or compression; implicitly, for example, an IE to be transmitted is combined with other information, and may be inferred or calculated based on other transmitted content, which is not enumerated herein one by one.

In some embodiments of the present application, in a sensing measurement process, message transmission and feedback manners include, but are not limited to, the following two types:

### 1. Request-triggered message transmission:

The first node 230 and/or the second node 240 or the network element 210 transmits a request-type message for sensing measurement. In a common IE thereof, a sensing session identifier and/or a sensing measurement identifier indicates to which sensing session and/or sensing measurement procedure the message belongs, and a sensing measurement message type IE indicates a type of the sensing measurement message. The request-triggered message transmission may occur in processes such as sensing capability reporting, sensing measurement configuration, and sensing measurement result reporting.

Taking sensing measurement reporting as an example, a sensing measurement reporting request message includes a sensing measurement reporting manner IE. When the IE indicates triggered reporting, after completing sensing measurement and obtaining measurement results, the first node 230 waits until receiving a sensing measurement reporting request message from the second node 240 or the network element 210, and then transmits a sensing measurement result reporting message carrying the measurement results to complete reporting.

### 2. Autonomous message transmission:

Autonomous message transmission may occur in processes such as sensing capability reporting, sensing measurement result reporting, and sensing measurement error processing. Autonomous message transmission is generally based on completed negotiation during a sensing measurement configuration process or an event trigger at a node. For example, when sensing measurement configuration indicates that sensing measurement results are to be actively reported, during reporting, the first node 230 may actively transmit a sensing measurement result reporting message based on measurement configuration without waiting for a reporting request message from the second node 240 or the network element 210. If an error occurs during sensing measurement, the first node 230 and/or the second node 240 may autonomously transmit an error report message. If sensing measurement capability of the first node 230 is updated or changed, the first node 230 may transmit a capability reporting message to the second node 240 or the network element 210 without waiting for a capability reporting request message from the second node 240 or the network element 210.

Autonomous sensing measurement message transmission often depends on a sensing timer at the first node 230 and/or the second node 240. When sensing measurement is established or the sensing timer is reset, the first node 230 and/or the second node 240 and/or the network element 210 starts the sensing timer and maintains time synchronization during sensing measurement. When sensing measurement is terminated explicitly or implicitly, or when the sensing timer times out, the sensing timer stops.

Taking autonomous sensing measurement result reporting as an example, during a sensing measurement configuration phase, the network element 210 and/or the second node 240 configures the following sensing reporting IE to the first node 230:
Sensing measurement reporting manner = {active reporting on, reporting time T0, timeout time T1}.

This IE indicates that the reporting manner is active reporting. When the timer reaches time T0, a measurement node performs sensing reporting. From time T0, if reporting is not performed within time T1, the reporting process times out and stops.

FIG. 4 is a schematic flowchart of a wireless communication method for sensing measurement provided by embodiments of the present application. As shown in FIG. 4, the wireless communication method for sensing measurement is performed by the first node 230, and the method comprises:
Operation 401: transmitting, to the second node 240 and/or the network element 210, a first sensing measurement message and/or receiving a second sensing measurement message transmitted by the second node 240 and/or the network element 210, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

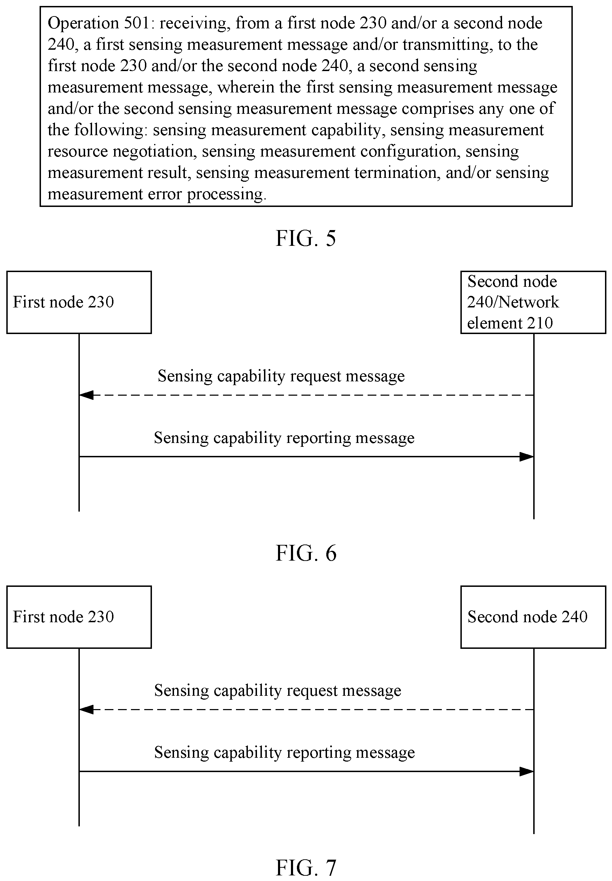

FIG. 5 is a schematic flowchart of a wireless communication method for sensing measurement provided by embodiments of the present application. As shown in FIG. 5, the wireless communication method for sensing measurement is performed by the network element 210, and the method comprises:
Operation 501: receiving a first sensing measurement message transmitted by the first node 230 and/or the second node 240 and/or transmitting a second sensing measurement message to the first node 230 and/or the second node 240, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

FIG. 6 is a schematic flowchart of a wireless communication method for sensing measurement provided by embodiments of the present application. As shown in FIG. 6, exemplarily, in some embodiments of the present application, in order to support exchange of sensing support capabilities among different nodes or functions so as to understand support levels of different nodes for sensing measurement and data measurement, thereby ensuring correctness of information configuration during a sensing measurement process or a data collection process, at least one of the following information needs to be transmitted between the first node 230 and the second node 240/network element 210:
Sensing capability request message: exemplarily, in some embodiments of the present application, the second sensing measurement message comprises a sensing capability request message. Before the first node 230 transmits a sensing capability reporting message to the second node 240 and/or the network element 210, the first node 230 receives the sensing capability request message from the second node 240 and/or the network element 210. The sensing capability request message is used to trigger a target node to transmit a sensing capability message supported by the target node according to requirements of the received sensing capability request message, wherein a description of sensing capability information supported by the target node is as described in subsequent embodiments.

### Sensing capability reporting message:

Exemplarily, in some embodiments of the present application, the first sensing measurement message comprises a sensing capability reporting message. The first node 230 transmitting the first sensing measurement message to the second node 240 and/or the network element 210 comprises: transmitting, by the first node 230, sensing capabilities supported by the first node 230 to the second node 240 and/or the network element 210 through the sensing capability reporting message.

Exemplarily, in some embodiments of the present application, the second information element of the sensing capability reporting message comprises sensing measurement capability information, sensing measurement accuracy information, sensing measurement behavior information, sensing device indication information, and/or device list information for a service. Exemplarily, in some embodiments of the present application, the first node 230 and/or the second node 240 reports sensing capability messages it supports, and the message reflects capability types of sensing capability supported by a target node, sensing accuracy, a sensing device list, and the like, and specific reporting messages are described in subsequent embodiments. Meanwhile, reporting of the sensing capability may be triggered by a sensing capability request message, or may be autonomously reported by a node. The message may be carried on an X2 interface, or on a link between base stations, or on an uplink channel.

Exemplarily, in some embodiments of the present application, for the sensing capability request message, in order to meet requirements of different devices and reduce system overhead of sensing capability reporting, information (body IE) comprised therein includes at least one of the following:
Sensing capability request information (info): in some embodiments, the sensing capability request information (info) is used to inform a target node to feed back sensing capability information it supports.
Sensing capability request target information (info): in some embodiments, the sensing capability request target information (info) is a target node list requested by the sensing capability request message, and is carried in the sensing capability request message for message addressing. The sensing capability request target information (info) may be represented as an IP address, device identification information, a user subscription identifier, or a target node specified by other device identification methods.
Sensing capability request content information (info):** in some embodiments, the sensing capability request content information (info) indicates sensing capability to be reported by a target device. The sensing capability request content information (info) may include at least one of sensing capability identifier (ID) information, specific sensing capability items, sensing capability feedback time requirements, sensing capability feedback channel resources, or other information reflecting sensing capabilities supported by the target device. For example, if the sensing capability ID information is used, the ID represents one or more sensing capabilities, such as ID = 1 representing position, ID = 2 representing position and movement speed, and ID = 3 representing position, movement speed, Doppler frequency shift, and the like. If specific sensing capability items are used, the sensing capability items to be fed back may be indicated by a string, a bitmap, an ID, or the like. If sensing capability feedback time requirements are used, the target device is required to feed back within a specified time, for example, within 10 ms. If sensing capability feedback channel resources are used, the target device is required to feed back sensing capability information on specified channel resources, such as time-frequency resources of PUCCH, PUSCH, PDSCH, PDCCH, PSSCH, or an IP channel.

For the sensing capability reporting message, the information directly reflects sensing capabilities supported by a node, and includes at least one of the following:
Sensing measurement capability information (info): the sensing measurement capability information (info) indicates whether the node supports sensing measurement and one or more sensing measurement capabilities supported. For example, the indication may be represented by a Boolean value, a string, a bitmap, an ID, or a combination thereof. For example, if a Boolean value is used, True indicates that sensing measurement is supported, and False indicates that sensing measurement is not supported. If a bitmap is used, for example "1000", 1 indicates that the sensing measurement capability is supported, and 0 indicates that the sensing measurement capability is not supported. If an ID is used, for example ID = 1 indicates that the sensing measurement capability represented by ID = 1 is supported; ID = {1, 2} indicates that sensing measurement capabilities represented by IDs 1 and 2 are supported; and so on.

Sensing measurement accuracy information (info): the sensing measurement accuracy information (info) indicates sensing measurement accuracy supported by one or more sensing capability items supported by the device. For example, {(sensing capability item 1, sensing accuracy 1), (sensing capability item 2, sensing accuracy 2)} indicates that sensing capability item 1 supports sensing accuracy 1, and sensing capability item 2 supports sensing accuracy 2. Alternatively, to reduce reporting overhead, it may be represented as {sensing accuracy 1, sensing accuracy 2}, indicating that sensing capability item 1 supports sensing accuracy 1, and sensing capability item 2 supports sensing accuracy 2.

Sensing measurement behavior information (info): the sensing measurement behavior information (info) indicates sensing measurement behaviors supported by the device, including but not limited to one or more of uplink sensing measurement, downlink sensing measurement, time-domain behavior of sensing measurement, sensing measurement delay, and the like. For uplink sensing measurement, it indicates that the node has a capability of transmitting corresponding reference signals or probing signals to assist other nodes in sensing, where the reference signals or probing signals include, but are not limited to, one or more of SRS, PUSCH, PDSCH, CSI-RS, SSB, DMRS, PTRS, PRS, and the like, and may carry transmission behavior rules of the signals. For downlink sensing measurement, it indicates that the node has a capability of performing sensing measurement and reporting based on downlink reference signals or probing signals, and may carry requirements for downlink signal transmission. For time-domain behavior of sensing measurement, it may include periodic, semi-static, or aperiodic modes, and supported periodicities may be indicated for periodic and semi-static modes. For sensing measurement delay, it indicates a computation time required for sensing measurement, which may be represented in two manners: one is a time requirement from receiving a measurement request to reporting sensing measurement, and the other is a time requirement from receiving a reference signal to reporting sensing measurement; other manners are also applicable.

### Sensing reference node indication information (info):

This IE is used to indicate whether a device belongs to a sensing reference node. After completing sensing measurement, the sensing reference node stores sensing measurement results. When the sensing reference node receives a sensing measurement reference information request message, the stored sensing measurement results are reported as reference information to the network element 210 to assist the network element 210 in sensing decision-making.

### Device list information for service (info):

This IE carries content indicating a list of devices currently served by the first node 230 and/or the second node 240.

FIG. 7 is a schematic flowchart of a wireless communication method for sensing measurement provided by embodiments of the present application. As shown in FIG. 7, exemplarily, in some embodiments of the present application, the sensing capability reporting message carries sensing measurement resource negotiation information. The first node 230 transmitting the first sensing measurement message to the second node 240 and/or the network element 210 comprises: transmitting, by the first node 230, a sensing measurement resource negotiation message to the second node 240 through the sensing capability reporting message.

Exemplarily, in some embodiments of the present application, the second information element of the sensing capability request message comprises sensing capability request information, sensing capability request target information, and/or sensing capability request content information. Exemplarily, in some embodiments, the sensing capability request message carries sensing measurement resource negotiation information, and the first node 230 receiving the second sensing measurement message from the second node 240 and/or the network element 210 comprises: receiving, by the first node 230, a sensing measurement resource negotiation message from the second node 240.

Exemplarily, in some embodiments of the present application, the sensing measurement resource negotiation information comprises reference signal resource information, and the reference signal resource information is used to indicate sensing measurement resource information requested and/or supported by the first node 230 and/or the second node 240. Exemplarily, in some embodiments, the reference signal resource information comprises first reference signal resource information requested and/or supported by the first node 230 for sensing measurement and/or second reference signal resource information requested and/or supported by the second node 240 for sensing measurement.

Exemplarily, in some embodiments of the present application, during a sensing measurement process, considering requirements of different sensing measurements (for example, high-precision positioning, high-precision movement direction determination, high-precision environmental information measurement, etc.), different sensing measurement signals are required to ensure measurement accuracy. Meanwhile, for uplink sensing measurement, due to limitations of node hardware and computational processing capabilities, supported sensing capability items or sensing measurement signal capabilities corresponding to capability items are very limited. For example, some devices may support probing signal transmission with shorter periodicity or higher frequency-domain density, while some devices, due to power consumption or computational constraints, may only support longer transmission periodicity or single transmission. In the above scenarios and other similar scenarios, different nodes need to further exchange configuration or requirement information of sensing measurement resources so as to complete sensing measurement among different nodes.

As shown in FIG. 7, through related messages of sensing capability exchange carrying sensing measurement resource negotiation information, sensing measurement resource information exchanged between the first node 230 and the second node 240 includes at least one of the following:
Reference signal resource information required by a node performing sensing measurement:
This information indicates measurement resource information required for the node to support sensing functionality, including, but not limited to, at least one of the following: frequency-domain resource configuration requirements of reference signals (e.g., occupied RB/RE resources, frequency-domain density, frequency hopping scheme), time-domain resource configuration requirements of reference signals (e.g., periodicity, time interval, measurement duration), spatial-domain resource configuration requirements of reference signals (e.g., transmit or receive beam information, number of antenna ports), sensing measurement content or supported functions, and measurement reporting delay requirements. The reference signals herein may include, but are not limited to, CSI-RS, SSB, DMRS, PTRS, SRS, or data channels such as PDSCH and PSSCH.

Reference signal resource information for supporting sensing measurement by other nodes:
This information indicates reference signal resource information that the node can transmit to support sensing measurement by other nodes, including, but not limited to, at least one of the following: frequency-domain resources of reference signals (e.g., occupied RB/RE resources, frequency-domain density, frequency hopping scheme), time-domain resources of reference signals (e.g., periodicity, time interval, measurement duration), spatial-domain resources of reference signals (e.g., transmit or receive beam information, number of antenna ports). The reference signals herein may include, but are not limited to, CSI-RS, SSB, DMRS, PTRS, SRS, or data channels such as PUSCH and PSSCH.

Exemplarily, in some embodiments of the present application, a configuration manner of the sensing measurement resource negotiation information comprises a pre-configuration mode and/or a direct feedback mode.

Exemplarily, in some embodiments of the present application, for "reference signal resource information required by the local node for sensing measurement," implementation manners may include two modes, namely a pre-configuration mode and a direct feedback mode.

For the pre-configuration mode, a target node obtains configuration requirement information of sensing measurement resources of other nodes, and selects supported information to feed back. For the direct feedback mode, the target node directly feeds back detailed sensing measurement reference signal resource information required by the target node to other nodes. Specific implementation examples are as follows:

### Pre-configuration mode:

As shown in Table 2 below, the first node 230 transmits measurement resource configuration information corresponding to different sensing capability items to the second node 240 (target node) through signaling such as RRC, MAC-CE, or user-plane signaling. For example, as shown in Table 2, serial number 1 indicates measurement configuration information 1 required by sensing capability item 1, including time-frequency characteristics, spatial characteristics, measurement duration, measurement delay, and the like; serial number 2 indicates measurement configuration information 2 required by sensing capability item 2, including time-frequency characteristics, spatial characteristics, measurement duration, measurement delay, and the like. Here, capability item 1 may represent a Doppler sensing requirement, and capability item 2 may represent a rotation sensing requirement, which are only examples.

**Table 2: Measurement configuration requirements in pre-configuration mode.**

| Serial number | Capability item | Measurement configuration requirements (pre-configuration mode) |
|---|---|---|
| 1 | Capability item #1 | Sensing measurement #1: resources, time/frequency behavior, measurement delay, measurement result, reporting information, etc. |
| 2 | Capability item #2 | Sensing measurement #2: resources, time/frequency behavior, measurement delay, measurement result, reporting information, etc. |

Exemplarily, in some embodiments of the present application, after the target node (second node 240) obtains a measurement configuration requirement list transmitted by node 1 via an air interface, the target node feeds back supported capability items and corresponding reference signal resource configuration information to the first node 230 according to its own capability. For example, when the second node 240 feeds back serial number 2, it indicates that the reference signal resource configuration information required by capability item 2 is supported. Similarly, the representation manner may also be a bitmap, a string, or other formats.

### Direct feedback mode:

A target node (second node 240) directly feeds back, via an air interface, measurement configuration requirements it supports or requires to the first node 230, including but not limited to sensing capability items, and time-frequency characteristics, spatial characteristics, measurement duration, measurement delay, and the like required or supported by the sensing capability items. As exemplified in Table 3, the information comprised may be represented by numbers, strings, or quantization levels. For example, when using quantization levels for measurement delay, a quantization level of 0 indicates that the measurement delay is less than 1 ms or one time unit; a quantization level of 1 indicates that the measurement delay is between 1 and 5 ms or between 1 and 5 time units; and so on.

**Table 3: Measurement configuration requirements in direct feedback mode.**

| Serial number | Capability item | Measurement configuration requirements (direct feedback mode) |
|---|---|---|
| 1 | Capability item #1 | Sensing measurement #1: resources, T/F behavior, measurement delay, measurement result, reporting information, etc. |
| 2 | Capability item #2 | Sensing measurement #2: resources, T/F behavior, measurement delay, measurement result, reporting information, etc. |

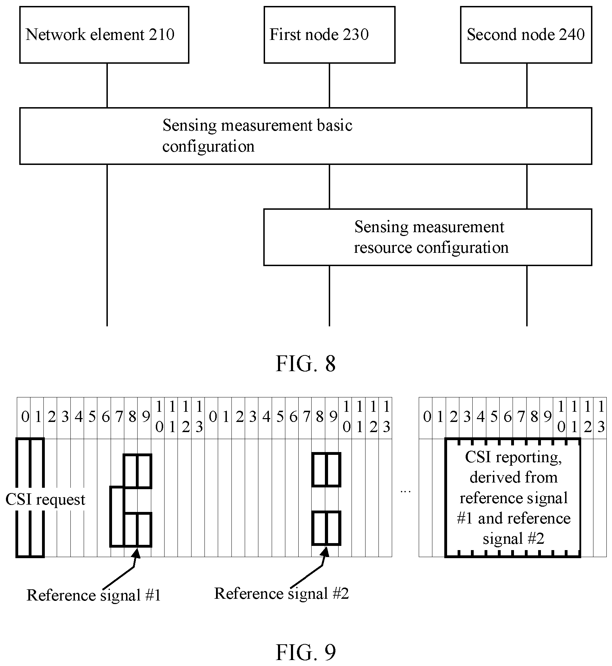

FIG. 8 is a schematic flowchart of a wireless communication method for sensing measurement provided by embodiments of the present application. As shown in FIG. 8, in some embodiments of the present application, the sensing measurement configuration comprises a sensing measurement basic configuration and/or a sensing measurement resource configuration. In some embodiments, the first node 230 receives the sensing measurement request message from the network element 210 to perform the sensing measurement configuration. In some embodiments, the sensing measurement configuration is based on the network element 210.

Exemplarily, in some embodiments of the present application, the sensing measurement basic configuration comprises at least one of the following information: sensing measurement behavior information, sensing measurement device information, segmented reporting information, sensing measurement reporting manner information, sensing measurement periodicity information, and/or sensing measurement termination manner information.

Exemplarily, in some embodiments of the present application, an execution manner of the sensing measurement basic configuration comprises: the first node 230 receives the second sensing measurement message transmitted by the second node 240.

Exemplarily, in some embodiments of the present application, sensing measurement configuration based on the network element 210 also comprises two steps:
1. The network element 210 determines sensing measurement methods, types, reporting content, and the like based on sensing capabilities of measurement nodes (the first node 230 and/or the second node 240), QoS requirements of sensing services, and the like, and transmits related information to the measurement nodes to complete basic configuration. Exemplarily, the network element 210 carries such sensing measurement configuration information in a sensing measurement request message and transmits it to the measurement nodes (the first node 230 and/or the second node 240). In a sensing measurement configuration phase, IEs carried in the sensing measurement request message include, but are not limited to:

Sensing measurement behavior: the network element 210 determines a measurement behavior method for the current sensing measurement based on sensing measurement behavior capabilities reported by the first node 230 and/or the second node 240.

Sensing measurement device: indicates a list of target nodes requested by the sensing measurement request message, carried for message addressing. The target nodes may be represented by IP addresses, device identification information, user subscription identifiers, or other identification methods.

Segmented reporting: indicates whether a node supports segmented sensing reporting. Similar to sensing measurement capability IE, the indication may be represented by a Boolean value, string, bitmap, ID, or a combination thereof. For example, True indicates support for segmented reporting, and False indicates no support.

Sensing measurement reporting method: indicates a reporting method, which may be trigger-based reporting or active reporting. In trigger-based reporting, a perception management function network element transmits a sensing measurement reporting request message to a target device, and reporting is performed only after receiving the request. In active reporting, a reporting time is indicated, and reporting is performed when a sensing timer of the node reaches the indicated time without waiting for a request.

Sensing measurement periodicity (optional): when sensing measurement is periodic, this IE indicates a measurement periodicity and/or a reporting periodicity. If sensing measurement is non-periodic, this IE is not required.

Sensing measurement termination manner: indicates a termination manner, which may be explicit termination or implicit termination. In explicit termination, the perception management function network element transmits a sensing measurement termination message to all sensing measurement devices to explicitly terminate the process. In implicit termination, sensing measurement is automatically terminated based on conditions such as time, number of measurements, or occurrence of an error.

2. Measurement nodes complete sensing measurement resource configuration based on negotiation of sensing measurement resources, including configuration of time-frequency resources and sensing measurement signals. This configuration is completed through sensing capability reporting messages exchanged between nodes and a negotiation process thereof. That is, sensing capability reporting messages carry sensing resource configuration-related request information, and a receiver carries corresponding sensing measurement resource configuration information in a sensing measurement request message. Exemplarily, the first node 230 and/or the second node 240 perform sensing measurement resource configuration based on the sensing measurement resource negotiation information.

Exemplarily, in some embodiments of the present application, the first sensing measurement message comprises a sensing measurement result reporting message. Transmitting, by the first node, the first sensing measurement message to the second node and/or the network element comprises: transmitting, by the first node, the sensing measurement result reporting message to the second node and/or the network element. Exemplarily, the second sensing measurement message comprises a sensing measurement reporting request message, and before transmitting the sensing measurement result reporting message, the first node receives the sensing measurement reporting request message from the second node and/or the network element.

Exemplarily, in some embodiments of the present application, reported sensing measurement results may be single or combined channel state-related parameters. Sensing measurement results to be reported are indicated by a report type in a sensing measurement request. Indication of measurement result content may be direct or indirect, for example by indexing. As shown in Table 4, each report type corresponds to an index, and when multiple reporting results are requested, sequence or matrix indications may be used to indicate reporting types and whether aggregation is required.

Sensing measurement results may be conventional channel measurements obtaining channel state parameters, as shown by indices 1-7 in Table 4, representing channel states and sensing results of environments, events, or objects in a transmission process. Alternatively, sensing measurement results may be Doppler-based measurements obtaining Doppler-related results, as shown by indices 8-15, representing sensing of target regions, objects, or motion states.

**Table 4: Categories of sensing measurement results.**

| Index (Index Indication) | Measurement report type |
|---|---|
| 0 | No report |
| 1 | CSI |
| 2 | RI |
| 3 | PMI |
| 4 | CQI |
| 5 | CRI |
| 6 | LI |
| 7 | RSSI |
| 8 | Sensing Image Direction |
| 9 | Sensing Image Range-Doppler |
| 10 | Sensing Image Range-Direction |
| 11 | Sensing Image Doppler-Direction |
| 12 | Sensing Image Range-Doppler Direction |
| 13 | Sensing Image Doppler-Phase |
| 14 | Sensing Image Range-Doppler Phase |
| 15 | Target |
| 16 and above | RESERVED |

Exemplarily, in some embodiments of the present application, the sensing measurement result information comprised in the first sensing measurement message comprises at least one of the following information: no reporting, a channel state result obtained through channel measurement, a Doppler result obtained through Doppler measurement, and/or reserved.

Exemplarily, in some embodiments of the present application, a reporting manner of the sensing measurement result information comprises at least one of the following: the first node 230 transmits the first sensing measurement message to the second node 240 and/or the network element 210, and/or, prior to transmitting the first sensing measurement message to the second node 240 and/or the network element 210, the first node 230 receives the second sensing measurement message from the second node 240 and/or the network element 210.

Exemplarily, in some embodiments of the present application, the first sensing measurement message comprises a sensing CSI measurement report, and the sensing CSI measurement report is related to a first sensing CSI measurement delay and/or a second sensing CSI measurement delay. The first sensing CSI measurement delay is used to characterize a minimum delay requirement between trigger signaling and the sensing measurement CSI report, and the second sensing CSI measurement delay is used to characterize a minimum delay requirement between a sensing measurement reference signal and the sensing measurement CSI report.

Specifically, in some embodiments of the present application, with reference to Table 4, the sensing measurement request message and/or the sensing measurement reporting request message indicates a sensing measurement result category, wherein the sensing measurement result category comprises no reporting, a channel state result obtained through channel measurement, a Doppler result obtained through Doppler measurement, and/or reserved.

A type of sensing measurement result to be reported may be specified during a sensing measurement configuration process by a sensing measurement request message, or may be updated in a sensing measurement reporting request message. According to the sensing measurement configuration process described in the embodiments of the present application, sensing measurement reporting is performed based on a method indicated by the sensing measurement configuration, that is, as described in the embodiments of the present application, sensing reporting may be request-triggered reporting or autonomously reported by a device.

Exemplarily, in some embodiments of the present application, during a sensing measurement configuration phase, a sensing measurement request message carries a sensing measurement result type IE and a sensing measurement reporting manner IE:
Sensing measurement reporting result type = {2, 4, 13}.
Sensing measurement reporting manner = triggered reporting.

Exemplarily, in some embodiments of the present application, with reference to Table 4, the message indicates that required reporting types are RI, CQI, and sensing image Doppler-phase. The reporting manner is triggered reporting. In a reporting phase, a measurement node waits for triggering of a sensing measurement reporting request message.

In a sensing measurement reporting request message, a sensing measurement result type IE, a sensing reporting device IE, and a sensing reporting time IE may also be carried to update information such as required reporting content, reporting devices, and reporting time, thereby making a reporting process more efficient and flexible. For example, in the sensing measurement reporting request message, sensing measurement reporting result is updated as:
Sensing measurement reporting result type = {2, 13}.

Thus, according to the indication, only RI and sensing image Doppler-phase need to be reported, and CQI is no longer required to be reported.

Exemplarily, in some embodiments of the present application, the sensing measurement resource configuration comprises at least one of the following information: sensing measurement configuration information based on channel state information (CSI), a number of units occupied for sensing measurement CSI processing, and/or a total number of sensing measurement CSI processing units. Exemplarily, in some embodiments, the sensing measurement configuration information based on CSI comprises at least one of the following information: sensing CSI measurement pilot resource configuration information, sensing CSI measurement reporting content configuration information, and/or sensing CSI content carrying information.

Exemplarily, in some embodiments of the present application, an execution manner of the sensing measurement resource configuration comprises a pre-configuration mode and/or a direct feedback mode. Exemplarily, in some embodiments, the pre-configuration mode comprises: the first node 230 pre-transmits the sensing measurement resource negotiation information to the second node 240 in a form of an identifier, and the first node 230 receives the identifier transmitted by the second node 240 to complete configuration. Exemplarily, in some embodiments, the direct feedback mode comprises: the first node 230 receives the sensing measurement resource negotiation information transmitted by the second node 240 to complete configuration.

Exemplarily, in some embodiments of the present application, if units occupied for sensing measurement CSI processing are less than or equal to a total number of sensing measurement CSI processing units, the sensing measurement configuration information based on CSI is configured to the second node 240. Exemplarily, in some embodiments, if the units occupied for sensing measurement CSI processing are greater than the total number of sensing measurement CSI processing units, the first node 230 abandons configuring the sensing measurement configuration information based on CSI to the second node 240.

Exemplarily, in some embodiments of the present application, when the first node 230 abandons configuring the sensing measurement configuration information based on CSI to the second node 240, the first node 230 and the second node 240 negotiate and/or adjust the sensing measurement configuration information based on CSI.

Specifically, in some embodiments of the present application, the first sensing measurement message comprises sensing measurement configuration information based on channel state information (CSI). The first node 230 transmitting the first sensing measurement message to the second node 240 comprises: the first node 230 providing the sensing measurement configuration information based on CSI to the second node 240. Exemplarily, in some embodiments of the present application, sensing measurement CSI processing capability of the first node 230 and/or the second node 240 is related to units occupied for sensing measurement CSI processing and/or a total number of sensing measurement CSI processing units. Exemplarily, in some embodiments, if units occupied for sensing measurement CSI processing are less than or equal to a total number of sensing measurement CSI processing units, the sensing measurement configuration information based on CSI is configured to the second node 240. Exemplarily, in some embodiments, if the units occupied for sensing measurement CSI processing are greater than the total number of sensing measurement CSI processing units, configuring the sensing measurement configuration information based on CSI to the second node 240 is abandoned. Exemplarily, in some embodiments, when configuring the sensing measurement configuration information based on CSI to the second node 240 is abandoned, the first node 230 and the second node 240 negotiate and/or adjust the sensing measurement configuration information based on CSI.

Exemplarily, in some embodiments of the present application, in order to support sensing measurement (CSI measurement) of the first node 230 and/or the second node 240 (base station or UE), when the first node 230 configures sensing measurement configuration information based on CSI for the second node 240 (including pilot resource configuration, CSI reporting configuration, measurement configuration, or triggering configuration), it is necessary to ensure that CSI processing units at the second node 240 do not exceed CSI processing capability of the second node 240. Therefore, sensing measurement CSI processing capability at the second node 240 needs to be defined, and the sensing measurement CSI processing capability at the second node 240 is determined by at least one of the following parameters:

1. Units occupied for sensing measurement CSI processing: used to indicate CSI processing units (Sensing CSI Processing Unit, SCPU) required for specific sensing measurement CSI, and the SCPU is related to specific CSI content and/or system parameter configuration. The system parameter configuration described herein includes, but is not limited to, at least one of subcarrier spacing, frequency point, and bandwidth, as shown in Table 5 below.

**Table 5: System parameter configuration.**

| SCPU | Sensing CSI content | Subcarrier spacing | Bandwidth |
|---|---|---|---|
| 1 | Direction | 15 kHz | 10 MHz |
| 2 | Direction | 30 kHz | 10 MHz |
| 3 | Direction | 30 kHz | 100 MHz |
| 2 | Range-Doppler | 15 kHz | 10 MHz |
| 1 | Range-Direction | 15 kHz | 10 MHz |

As shown in Table 5, if sensing CSI content is direction and system parameters are (15 kHz, 10 MHz), one SCPU unit is required; if sensing CSI content is direction and system parameters are (30 kHz, 10 MHz), two SCPU units are required; if sensing CSI content is range-Doppler and system parameters are (15 kHz, 10 MHz), two SCPU units are required; and so on. Other contents or parameters may be extended similarly by those skilled in the art and are not described in detail herein.

2. Total number of sensing measurement CSI processing units: used to indicate a total number of CSI processing units (SCPU) available for sensing measurement CSI at the first node 230 and/or the second node 240 (base station or UE), representing an overall CSI processing capability for sensing measurement of the first node 230 and/or the second node 240. This information is transmitted from the second node 240 to the first node 230 through a channel, and the transmission channel may include, but is not limited to, capability reporting, PUSCH/PDSCH/PSSCH, PUCCH/PDCCH/PSCCH, RRC, or other transmission channels.

Exemplarily, in some embodiments of the present application, based on the sensing measurement CSI processing capability of the second node 240 obtained as above, when the first node 230 performs sensing measurement configuration based on CSI according to the capability of the second node 240, at least one of the following requirements needs to be satisfied:
1. A number of CSI processing units occupied by sensing measurement configuration does not exceed the total number of sensing measurement CSI processing units or the total number of CSI processing units of the second node 240 $\left(\sum {O}_{SCPU , K}\right. \leq {S}_{CPU}$ ). As *O_{SCPU,k}* described above, represents CSI processing units required for the k-th sensing measurement CSI, and *S_{CPU}* represents the total number of CSI processing units for sensing measurement. In another embodiment, the total number of CSI processing units may refer to a total number of CSI processing units of a UE, including CSI processing units for sensing measurement and CSI processing units for non-sensing measurement.
2. The second node 240 does not intend to accept configuration information exceeding its sensing CSI processing capability.Σ*O*_{*SCPU*,*k*} ≤ *S_{CPU}* If requirement is not satisfied, sensing CSI operations or reporting of lower priority are discarded, that is, reporting content does not include such CSI information.

Exemplarily, in some embodiments of the present application, the sensing measurement configuration information based on CSI comprises sensing CSI measurement pilot resource configuration information, sensing CSI measurement reporting content configuration information, and/or sensing CSI content carrying information.

Exemplarily, in some embodiments of the present application, in a sensing measurement resource configuration process on a RAN side (including pilot resource configuration, CSI reporting configuration, triggering configuration, etc.), at least one of the following methods is included:
1. Sensing CSI measurement pilot resource configuration:** including, but not limited to, pilot information for sensing CSI measurement, such as periodicity information, frequency location information, pilot sequences, and the like.
2. Sensing CSI measurement reporting content configuration:including, but not limited to, sensing CSI measurement content, such as direction information, Doppler information, range information, and the like. In addition, the configuration may further include at least one of the following information:
   Transmission periodicity requirement of a pilot signal (or reference signal), used to indicate whether the reference signal is periodically transmitted, and, if periodic transmission is used, to indicate a corresponding transmission periodicity. The indication of periodic transmission may be in a Boolean or bitmap form, or may be determined based on whether a periodicity parameter is valid. For example, if the periodicity is invalid, it indicates single transmission; if valid, it indicates periodic transmission. The periodicity may be expressed in units such as symbols, slots, frames, or other units.

Duration requirement of the reference signal, used to indicate how long the reference signal needs to be maintained for the measurement content, where the time unit may be symbols, slots, frames, milliseconds (ms), seconds (s), or other units.

Measurement accuracy requirement, used to indicate an accuracy requirement of the sensing CSI measurement content, which may include accuracy requirements, bit-width requirements (e.g., 16 bits or 64 bits), or other information.

Sensing measurement CSI payload requirement, used to indicate a payload requirement for transmitting sensing CSI measurement, so as to fully utilize uplink transmission resources such as PUCCH or PUSCH.

3. Sensing CSI content carrying: to satisfy requirements for large-capacity CSI feedback in sensing measurement, a two-stage CSI feedback method may be used. For example, CSI Part I may carry an indication of sensing CSI content and/or sensing accuracy, and CSI Part II may carry specific sensing CSI content according to the indication in CSI Part I.

Exemplarily, in some embodiments of the present application, in order to support broader sensing measurement CSI content, the following important design is also included during a CSI measurement process:
FIG. 9 is a schematic flowchart of a wireless communication method for sensing measurement provided by embodiments of the present application. As shown in FIG. 9, exemplarily, in some embodiments, one sensing measurement CSI trigger may trigger multiple reference signal transmissions, while only one sensing CSI measurement report is fed back. Exemplarily, the first node 230, after configuring sensing measurement configuration information based on CSI to the second node 240, triggers transmission of a plurality of reference signals related to CSI, wherein a preset interval is maintained between the plurality of reference signals.

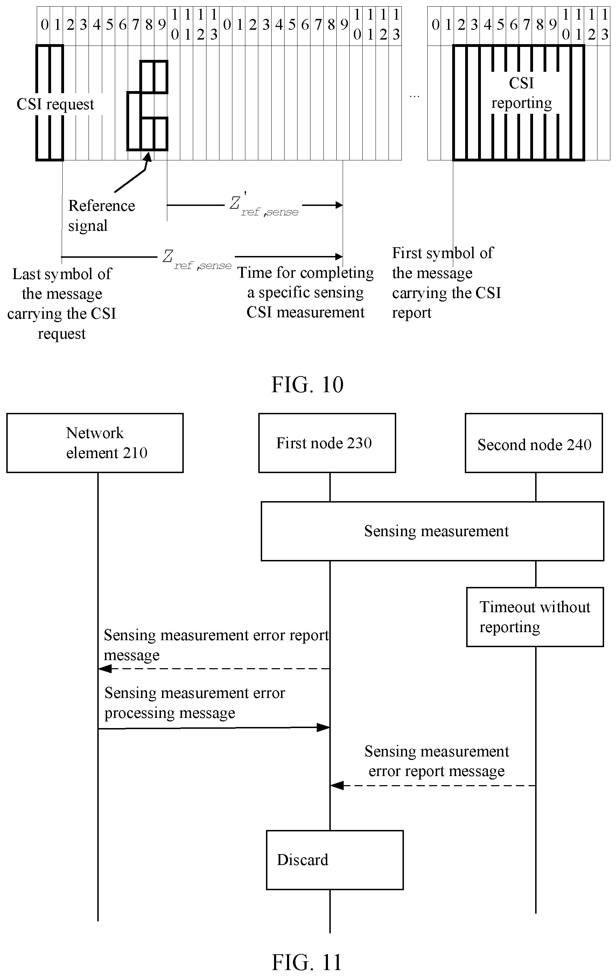

FIG. 10 is a schematic flowchart of a wireless communication method for sensing measurement provided by embodiments of the present application. As shown in FIG. 10, exemplarily, in some embodiments, the first sensing measurement message comprises a sensing CSI measurement report, and the sensing CSI measurement report is related to a first sensing CSI measurement delay and/or a second sensing CSI measurement delay. The first sensing CSI measurement delay is used to characterize a minimum delay requirement between trigger signaling and the sensing measurement CSI report, and the second sensing CSI measurement delay is used to characterize a minimum delay requirement between a sensing measurement reference signal and the sensing measurement CSI report.

Exemplarily, in some embodiments of the present application, considering that a system needs to support multiple types of terminal devices or node devices and sensing CSI processing capabilities of each device vary significantly, in order to ensure that a terminal device or node device can complete measurement and report sensing CSI content within a specific time, it is necessary to define or specify timing relationships for sensing measurement.

According to the above timing relationships, for sensing-based CSI measurement, the following two time parameters need to be determined:
1. First sensing CSI measurement delay: this delay is used to describe a minimum delay requirement between trigger signaling and sensing measurement CSI reporting. The trigger signaling may be DCI, MAC-CE, RRC configuration information, or the like. The delay may be expressed in units such as symbols, slots, subframes, frames, or the like.
2. Second sensing CSI measurement delay: this delay is used to describe a minimum delay requirement between a sensing measurement reference signal and sensing measurement CSI reporting. The sensing measurement reference signal may be a pilot or data signal such as CSI-RS, SRS, SSB, DMRS, PUSCH, or PDSCH. The delay may be expressed in units such as symbols, slots, subframes, frames, or the like.

The first sensing CSI measurement delay and/or the second sensing CSI measurement delay may be predefined by a system or may be fed back by a UE or node device to an upper-level node. End points of both delays are before a first symbol of a message carrying a CSI report.

FIG. 11 is a schematic flowchart of a wireless communication method for sensing measurement provided by embodiments of the present application. As shown in FIG. 11, exemplarily, in some embodiments, the first sensing measurement message and/or the second sensing measurement message comprises sensing measurement error processing. Exemplarily, the sensing measurement error processing comprises at least one of the following information: a sensing measurement error report and/or a sensing measurement error processing indication.

Exemplarily, in some embodiments, an execution manner of the sensing measurement error processing comprises at least one of the following: the first node 230 transmits the first sensing measurement message to the second node 240 and/or the network element 210, and/or, prior to transmitting the first sensing measurement message, the first node 230 receives the second sensing measurement message from the second node 240 and/or the network element 210.

Specifically, in some embodiments, when an error occurs, the first node 230 transmits a sensing measurement error report message to the network element 210, and performs error processing according to an indication of a sensing measurement error processing message transmitted by the network element 210.

Exemplarily, in some embodiments, after sensing measurement, if the second node 240 fails to complete reporting within a timeout due to no service signal or the device not being powered on, the first node 230 transmits a sensing measurement error report message to the network element 210. The message may carry the following IEs:
Error type = {report error}, error content = {time-out, sensor timer off}.

After receiving the message, the perception management function network element feeds back a sensing measurement error processing message, which may carry the following IE:
Error processing = {discard}, indicating that the measurement node discards measurement results.

After the first node 230 satisfies reporting conditions, the first node 230 transmits, at the earliest time, a sensing measurement result reporting message to the second node 240, carrying measurement results that were not reported previously due to timeout. The second node 240, according to a sensing measurement error processing message, discards the results and no longer reports the measurement results to the network element 210.

Exemplarily, in some embodiments of the present application, an innovative solution is provided for how a mobile cellular network supports a sensing service. The embodiments of the present application propose a technical solution supporting UE and NG-RAN to perform sensing measurement, and design a process in which, after a perception management function network element receives a sensing service request, the network element performs measurement decision-making and scheduling, and a base station and a UE perform measurement, and further includes collection and computation of measurement results by the perception management function network element, so that a wireless communication network can have the capability and process to perform measurement based on a sensing service request. Beneficial effects of the embodiments of the present application include at least the following:
1. Enabling a core network to include a perception management function network element capable of performing analysis, scheduling, management, and computation for sensing requirements.
2. Providing a complete sensing measurement process supporting decision-making, configuration, establishment, management, and termination of sensing measurement among a UE, a base station, and a perception management function network element.
3. Supporting exchange, update, storage, and query of sensing capabilities between a UE and a RAN entity and a core network.
4. Improving signaling and network capabilities supporting the sensing measurement process.
5. Supporting multiple sensing measurement methods, processes, and quantities.

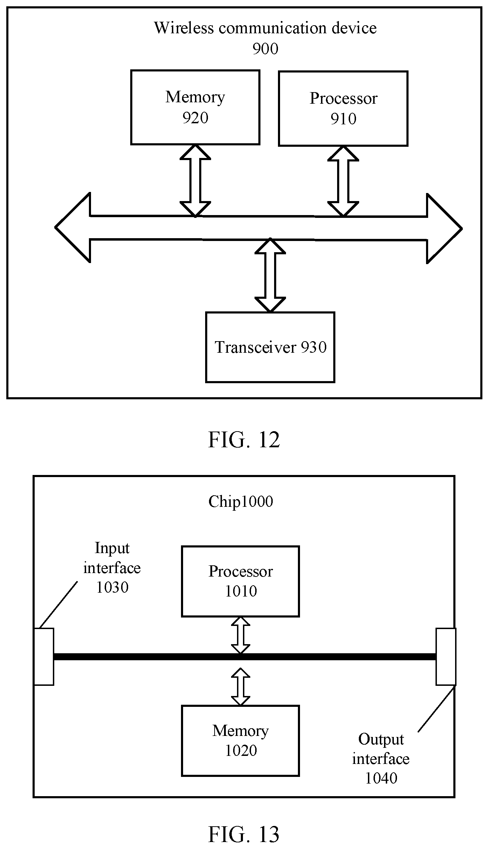

FIG. 12 is a schematic structural diagram of a wireless communication device 900 provided by embodiments of the present application. The wireless communication device may be a user equipment, a base station, or a network element. As shown in FIG. 12, the wireless communication device 900 comprises a processor 910, and the processor 910 may invoke and run a computer program from a memory to implement methods in the embodiments of the present application.

Optionally, as shown in FIG. 12, the wireless communication device 900 may further comprise a memory 920. The processor 910 may invoke and run a computer program from the memory 920 to implement methods in the embodiments of the present application. The memory 920 may be an independent device separate from the processor 910, or may be integrated into the processor 910.

Optionally, as shown in FIG. 12, the wireless communication device 900 may further comprise a transceiver 930. The processor 910 may control the transceiver 930 to communicate with other devices, specifically to transmit information or data to other devices or receive information or data transmitted by other devices. The transceiver 930 may comprise a transmitter and a receiver, and may further comprise one or more antennas.

Optionally, the wireless communication device 900 may specifically be a base station in the embodiments of the present application, and may implement corresponding processes implemented by the base station in various methods of the embodiments of the present application, which are not repeated herein for brevity.

Optionally, the wireless communication device 900 may specifically be a mobile user equipment/user equipment in the embodiments of the present application, and may implement corresponding processes implemented by the mobile user equipment/user equipment in various methods of the embodiments of the present application, which are not repeated herein for brevity.

Optionally, the wireless communication device 900 may specifically be a network element in the embodiments of the present application, and may implement corresponding processes implemented by the network element in various methods of the embodiments of the present application, which are not repeated herein for brevity.

FIG. 13 is a schematic structural diagram of a chip according to embodiments of the present application. As shown in FIG. 13, the chip 1000 comprises a processor 1010, and the processor 1010 may invoke and run a computer program from a memory to implement methods in the embodiments of the present application.

Optionally, as shown in FIG. 13, the chip 1000 may further comprise a memory 1020. The processor 1010 may invoke and run a computer program from the memory 1020 to implement methods in the embodiments of the present application. The memory 1020 may be an independent device separate from the processor 1010, or may be integrated into the processor 1010.

Optionally, the chip 1000 may further comprise an input interface 1030, and the processor 1010 may control the input interface 1030 to communicate with other devices or chips, specifically to obtain information or data transmitted by other devices or chips.

Optionally, the chip 1000 may further comprise an output interface 1040, and the processor 1010 may control the output interface 1040 to communicate with other devices or chips, specifically to output information or data to other devices or chips.

Optionally, the chip may be applied to a base station in the embodiments of the present application, and may implement corresponding processes implemented by the base station in various methods of the embodiments of the present application, which are not repeated herein for brevity.

Optionally, the chip may be applied to a mobile user equipment/user equipment in the embodiments of the present application, and may implement corresponding processes implemented by the mobile user equipment/user equipment in various methods of the embodiments of the present application, which are not repeated herein for brevity.

Optionally, the chip may be applied to a network element in the embodiments of the present application, and may implement corresponding processes implemented by the network element in various methods of the embodiments of the present application, which are not repeated herein for brevity.

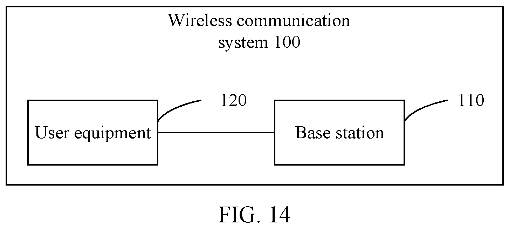

FIG. 14 is a schematic block diagram of a wireless communication system 100 provided by embodiments of the present application. As shown in FIG. 14, the communication system 100 comprises a user equipment 120 and a base station 110. The user equipment 120 may be configured to implement corresponding functions implemented by the user equipment in the above methods, and the base station 110 may be configured to implement corresponding functions implemented by the base station in the above methods, which are not repeated herein for brevity.

It should be understood that the processor in the embodiments of the present application may be an integrated circuit chip having signal processing capability. In an implementation process, steps of the above method embodiments may be implemented by integrated logic circuits of hardware in the processor or by instructions in the form of software.

It can be understood that the memory in the embodiments of the present application may be a volatile memory or a non-volatile memory, or may include both. It should be noted that the memory described herein is intended to include, but is not limited to, these and any other suitable types of memory. The embodiments of the present application further provide a computer-readable storage medium configured to store a computer program.

Optionally, the computer-readable storage medium may be applied to a base station in the embodiments of the present application, and the computer program causes a computer to perform corresponding processes implemented by the base station in the above methods, which are not repeated herein for brevity. Optionally, the computer-readable storage medium may be applied to a mobile user equipment/user equipment in the embodiments of the present application, and the computer program causes a computer to perform corresponding processes implemented by the mobile user equipment/user equipment in the above methods, which are not repeated herein for brevity.

The embodiments of the present application further provide a computer program product comprising computer program instructions.

Optionally, the computer program product may be applied to a base station in the embodiments of the present application, and the computer program instructions cause a computer to perform corresponding processes implemented by the base station in the above methods, which are not repeated herein for brevity. Optionally, the computer program product may be applied to a mobile user equipment/user equipment in the embodiments of the present application, and the computer program instructions cause a computer to perform corresponding processes implemented by the mobile user equipment/user equipment in the above methods, which are not repeated herein for brevity.

The embodiments of the present application further provide a computer program.

Optionally, the computer program may be applied to a base station in the embodiments of the present application. When the computer program is executed on a computer, the computer performs corresponding processes implemented by the base station in the above methods, which are not repeated herein for brevity. Optionally, the computer program may be applied to a mobile user equipment/user equipment in the embodiments of the present application. When the computer program is executed on a computer, the computer performs corresponding processes implemented by the mobile user equipment/user equipment in the above methods, which are not repeated herein for brevity.

Those skilled in the art may understand that units and algorithm steps described in conjunction with the embodiments disclosed herein can be implemented in electronic hardware, or in a combination of computer software and electronic hardware. Whether these functions are implemented in hardware or software depends on specific applications and design constraints of the technical solutions. Skilled persons may use different methods to implement the described functions for each specific application, but such implementations shall not be considered as departing from the scope of the present application.

The above descriptions are only specific embodiments of the present application, and the protection scope of the present application is not limited thereto. Any modifications or substitutions readily conceived by those skilled in the art within the technical scope disclosed in the present application shall fall within the protection scope of the present application. Therefore, the protection scope of the present application shall be subject to the protection scope of the claims.

## Claims

1. A wireless communication method for sensing measurement, performed by a first node, comprising:
transmitting, to a second node and/or a network element, a first sensing measurement message and/or receiving a second sensing measurement message transmitted by the second node and/or the network element, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

2. The method of claim 1, wherein the sensing measurement capability information comprised in the first sensing measurement message comprises at least one of the following information:
a sensing capability indication information,
sensing measurement accuracy information,
sensing measurement behavior information,
a sensing device indication information, and/or
a device list information for a service.

3. The method of claim 1, wherein the sensing measurement capability information comprised in the second sensing measurement message comprises at least one of the following information:
a sensing capability request information,
a sensing capability request target information, and/or
a sensing capability request content information.

4. The method of claim 2 or 3, wherein a reporting manner of the sensing measurement capability information comprises at least one of the following:
the first node transmitting the first sensing measurement message to the second node and/or the network element, and/or
prior to transmitting the first sensing measurement message to the second node and/or the network element, the first node receiving the second sensing measurement message from the second node and/or the network element.

5. The method of claim 1, wherein the sensing measurement resource negotiation information comprised in the first sensing measurement message comprises first reference signal resource information, and the first reference signal resource information is used to indicate sensing measurement resource information requested by the first node.

6. The method of claim 1, wherein the sensing measurement resource negotiation information comprised in the second sensing measurement message comprises second reference signal resource information, and the second reference signal resource information is used to indicate sensing measurement resource information supported by the second node.

7. The method of claim 1, wherein the sensing measurement configuration comprises a sensing measurement basic configuration and/or a sensing measurement resource configuration.

8. The method of claim 7, wherein the sensing measurement basic configuration comprises at least one of the following information:
sensing measurement behavior information,
sensing measurement device information,
segmented reporting information,
sensing measurement reporting manner information,
sensing measurement periodicity information, and/or
sensing measurement termination manner information.

9. The method of claim 7, wherein an execution manner of the sensing measurement basic configuration comprises: the first node receives the second sensing measurement message transmitted by the second node.

10. The method of claim 7, wherein the sensing measurement resource configuration comprises at least one of the following information:
sensing measurement configuration information based on channel state information (CSI),
a number of units occupied for sensing measurement CSI processing, and/or
a total number of sensing measurement CSI processing units.

11. The method of claim 10, wherein the sensing measurement configuration information based on CSI comprises at least one of the following information:
sensing CSI measurement pilot resource configuration information,
sensing CSI measurement reporting content configuration information, and/or
sensing CSI content carrying information.

12. The method of any one of claims 7 to 11, wherein an execution manner of the sensing measurement resource configuration comprises a pre-configuration mode and/or a direct feedback mode.

13. The method of claim 12, wherein the pre-configuration mode comprises:
the first node pre-transmitting the sensing measurement resource negotiation information to the second node in a form of an identifier, and
the first node receiving the identifier transmitted by the second node to complete configuration.

14. The method of claim 12, wherein the direct feedback mode comprises:
the first node receiving the sensing measurement resource negotiation information transmitted by the second node to complete configuration.

15. The method of any one of claims 7 to 11, wherein, if units occupied for sensing measurement CSI processing are less than or equal to a total number of sensing measurement CSI processing units, the sensing measurement configuration information based on CSI is configured to the second node.

16. The method of claim 15, wherein, if the units occupied for sensing measurement CSI processing are greater than the total number of sensing measurement CSI processing units, configuring the sensing measurement configuration information based on CSI to the second node is abandoned.

17. The method of claim 16, wherein, when configuring the sensing measurement configuration information based on CSI to the second node is abandoned, the first node and the second node negotiate and/or adjust the sensing measurement configuration information based on CSI.

18. The method of any one of claims 12 to 14, wherein, after the first node configures the sensing measurement configuration information based on CSI to the second node, transmission of a plurality of reference signals related to CSI is triggered, wherein a preset interval is maintained between the plurality of reference signals.

19. The method of claim 1, wherein the sensing measurement result information comprised in the first sensing measurement message comprises at least one of the following information:
no reporting,
a channel state result obtained through channel measurement,
a Doppler result obtained through Doppler measurement, and/or
reserved.

20. The method of claim 19, wherein a reporting manner of the sensing measurement result information comprises at least one of the following:
the first node transmitting the first sensing measurement message to the second node and/or the network element, and/or
prior to transmitting the first sensing measurement message to the second node and/or the network element, the first node receiving the second sensing measurement message from the second node and/or the network element.

21. The method of claim 20, wherein the first sensing measurement message comprises a sensing CSI measurement report, the sensing CSI measurement report is related to a first sensing CSI measurement delay and/or a second sensing CSI measurement delay, the first sensing CSI measurement delay is used to characterize a minimum delay requirement between trigger signaling and the sensing measurement CSI report, and the second sensing CSI measurement delay is used to characterize a minimum delay requirement between a sensing measurement reference signal and the sensing measurement CSI report.

22. The method of claim 1, wherein the sensing measurement error processing comprises at least one of the following information:
a sensing measurement error report, and/or
a sensing measurement error processing indication.

23. The method of claim 22, wherein an execution manner of the sensing measurement error processing comprises at least one of the following:
the first node transmitting the first sensing measurement message to the second node and/or the network element, and/or
prior to transmitting the first sensing measurement message to the second node and/or the network element, the first node receiving the second sensing measurement message from the second node and/or the network element.

24. The method of any one of claims 1 to 23, wherein the first sensing measurement message and/or the second sensing measurement message comprises sensing session identification information, sensing measurement identification information, ACK indication information, sensing measurement message type information, segmented message indication information, and/or segmentation information.

25. A wireless communication method for sensing measurement, performed by a network element, comprising:
receiving a first sensing measurement message transmitted by a first node and/or transmitting a second sensing measurement message to the first node, wherein the first sensing measurement message and/or the second sensing measurement message comprises any one of the following: a sensing measurement capability, a sensing measurement resource negotiation, a sensing measurement configuration, a sensing measurement result, a sensing measurement termination, and/or a sensing measurement error processing.

26. The method of claim 25, wherein the sensing measurement capability information comprised in the first sensing measurement message comprises at least one of the following information:
a sensing capability indication information,
sensing measurement accuracy information,
sensing measurement behavior information,
a sensing device indication information, and/or
a device list information for a service.

27. The method of claim 25, wherein the sensing measurement capability information comprised in the second sensing measurement message comprises at least one of the following information:
a sensing capability request information,
a sensing capability request target information, and/or
a sensing capability request content information.

28. The method of claim 26 or 27, wherein a reporting manner of the sensing measurement capability information comprises at least one of the following:
the network element receiving the first sensing measurement message transmitted by the first node, and/or
prior to receiving the first sensing measurement message transmitted by the first node, the network element transmitting the second sensing measurement message to the first node.

29. The method of claim 25, wherein the sensing measurement configuration comprises a sensing measurement basic configuration and/or a sensing measurement resource configuration.

30. The method of claim 29, wherein the sensing measurement basic configuration comprises at least one of the following information:
sensing measurement behavior information,
sensing measurement device information,
segmented reporting information,
sensing measurement reporting manner information,
sensing measurement periodicity information, and/or
sensing measurement termination manner information.

31. The method of claim 29, wherein the sensing measurement resource configuration comprises at least one of the following information:
sensing measurement configuration information based on channel state information (CSI),
a number of units occupied for sensing measurement CSI processing, and/or
a total number of sensing measurement CSI processing units.

32. The method of claim 31, wherein the sensing measurement configuration information based on CSI comprises at least one of the following information:
sensing CSI measurement pilot resource configuration information,
sensing CSI measurement reporting content configuration information, and/or
sensing CSI content carrying information.

33. The method of claim 25, wherein the sensing measurement result information comprised in the first sensing measurement message comprises at least one of the following information:
no reporting,
a channel state result obtained through channel measurement,
a Doppler result obtained through Doppler measurement, and/or
reserved.

34. The method of claim 33, wherein a reporting manner of the sensing measurement result information comprises at least one of the following:
the network element receiving the first sensing measurement message transmitted by the first node, and/or
prior to receiving the first sensing measurement message transmitted by the first node, the network element transmitting the second sensing measurement message to the first node.

35. The method of claim 34, wherein the first sensing measurement message comprises a sensing CSI measurement report, the sensing CSI measurement report is related to a first sensing CSI measurement delay and/or a second sensing CSI measurement delay, the first sensing CSI measurement delay is used to characterize a minimum delay requirement between trigger signaling and the sensing measurement CSI report, and the second sensing CSI measurement delay is used to characterize a minimum delay requirement between a sensing measurement reference signal and the sensing measurement CSI report.

36. The method of claim 25, wherein the sensing measurement error processing comprises at least one of the following information:
a sensing measurement error report, and/or
a sensing measurement error processing indication.

37. The method of claim 36, wherein an execution manner of the sensing measurement error processing comprises at least one of the following:
the network element receives the first sensing measurement message transmitted by the first node, and/or
prior to receiving the first sensing measurement message transmitted by the first node, the network element transmits the second sensing measurement message to the first node.

38. The method of any one of claims 1 to 37, wherein the first sensing measurement message and/or the second sensing measurement message comprises sensing session identification information, sensing measurement identification information, ACK indication information, sensing measurement message type information, segmented message indication information, and/or segmentation information.

39. A wireless communication device, comprising: a processor and a memory, wherein the memory is configured to store a computer program, and the processor is configured to invoke and run the computer program stored in the memory to perform the method of any one of claims 1 to 38.
